# EUROPEAN PATENT APPLICATION

(11) **EP 3 094 039 A1**
(43) Date of publication of application: **16.11.2016**
(21) Application number: 15305718.7
(22) Date of filing: 13.05.2015
(51) Int. Cl.: H04L 9/30, H04L 9/08

(54) **METHOD FOR OPTIMIZING THE EXECUTION OF A FUNCTION WHICH GENERATES AT LEAST ONE KEY WITHIN AN INTEGRATED CIRCUIT DEVICE**

(71) Applicant: GEMALTO SA, 92190 Meudon (FR)
(72) Inventor: LEE, Kean Tee, 92190 Meudon (FR); HAMZI, Nabil, 92190 Meudon (FR); ZEAMARI, Ali, 92190 Meudon (FR); ROUSSEL, Nicolas, 92190 Meudon (FR); VILLEGAS, Karine, 92190 Meudon (FR); COULIER, Charles, 92190 Meudon (FR); OLIVA, Minette, 92190 Meudon (FR); WONG, Tsu Soon, 92190 Meudon (FR)
(74) Representative: Lotaut, Yacine Diaw

(57) **Abstract**

The present invention relates to method for optimizing the execution of a function (OP1), said function (OP1) generating at least one key (k1) and being performed within an integrated circuit device (IC), said integrated circuit device (IC) comprising a buffer (BUFF), wherein said method (MTH) comprising:
- upon reception of a command (CMD) by said integrated circuit device (IC):
- computing at least one data (p1) from which said at least one key (k1) will be generated;
- storing said at least one data (p1) in said buffer (BUFF);
- executing said command (CMD).

## Description

### TECHNICAL FIELD

The present invention relates to a method for optimizing the execution of a function, said function generating at least one key and being performed within an integrated circuit device, said integrated circuit device comprising a buffer. The invention also relates to an associated integrated circuit device.

Such a method may be used in a non-limitative example in any integrated circuit device which is adapted to execute cryptographic processes.

### BACKGROUND OF THE INVENTION

For an integrated circuit device which uses low performance processor unit, it takes a long processing time to handle complex operations such as those found in a function generating at least one key, such as a cryptographic process. One well-known cryptographic process is for example a public key algorithm which generates a pair of public and private keys.

The pair of keys is generated on board, which means within the integrated circuit device itself. To generate such pair of keys, the public key algorithm comprises a first step which identifies two unique prime numbers. This first step is most time consuming. Depending of the performance of the processor unit, said time could range from 1 second to 60 seconds or more.

One problem of this prior art is that when the cryptographic process takes too long time, some terminals which cooperate with the integrated circuit device and waits for a ciphered message according to said cryptographic process, may treat it as a no response from said integrated circuit device and therefore may reset the integrated circuit device.

### SUMMARY OF THE INVENTION

It is an object of the invention to provide a method for optimizing the execution of a function, said function generating at least one key and being performed within an integrated circuit device, which permits to improve the time processing of said function and which therefore avoids a reset of the integrated circuit device.

To this end, there is provided a method for optimizing the execution of a function, said function generating at least one key and being performed within an integrated circuit device, said integrated circuit device comprising a buffer, wherein said method comprising:
- upon reception of a command by said integrated circuit device :
   - computing at least one data from which said at least one key will be generated;
   - storing said at least one data in said buffer;
   - executing said command.

As a part or all the data needed for the key generation is performed during a command, i.e. outside the function, the execution time of said function will decrease, enabling the integrated circuit device to answer to a terminal on time.

According to non-limitative embodiments of the invention, the method in accordance with the invention further comprises the following characteristics.

In a non-limitative embodiment, said method further comprises:
- upon reception of a command by said integrated circuit device:
   - computing said at least one key from said at least one data;
   - storing said at least one key in said buffer;
   - executing said command.

In a non-limitative embodiment, said method further comprises:
- when said function is called by a command received by said integrated circuit device:
   - verifying if said buffer comprises said at least one data;
   - if said buffer comprises said at least one data, retrieving said at least one data from said buffer;
   - executing said function, said execution comprising the generation of said at least one key from said at least one data.

In a non-limitative embodiment, said command is a predetermined command.

In a non-limitative embodiment, said method further comprises computing at least one data during the execution of said function if:
- said buffer doesn't comprise any data needed for said key generation; or
- said buffer doesn't comprise all the data needed for said key generation.

In a non-limitative embodiment, said method further comprises upon reception of said command, verifying if the buffer is full.

In a non-limitative embodiment, said method further comprises storing in said buffer at least one data which has been computed during a personalization phase of said integrated circuit device.

In a non-limitative embodiment, said computation of at least one data comprises the computation of a pair of data from which a pair of keys will be generated.

In a non-limitative embodiment, said pair of keys comprises a public key and a private key.

In a non-limitative embodiment, said function is a public key algorithm.

In a non-limitative embodiment, said public key algorithm is a RSA Key generation algorithm.

In a non-limitative embodiment, said at least one data is a prime number.

In a non-limitative embodiment, said computation of at least one prime number comprises:
- generating a random number;
- verifying if said random number is a prime number with a primality test.

In a non-limitative embodiment, said integrated circuit device is a secure element.

In a non-limitative embodiment, said integrated circuit device is an integrated circuit card and said command is an APDU command.

In addition, there is provided an integrated circuit device for optimizing the execution of a function which generates at least one key, said integrated circuit device comprising a buffer and being adapted to:
- upon reception of a command:
   - compute at least one data from which said at least one key will be generated;
   - store said at least one data in said buffer;
   - execute said command.

In a non-limitative embodiment, when said function is called by a command received by said integrated circuit device, said integrated circuit device is further adapted to:
- verify if said buffer comprises said at least one data;
- if said buffer comprises said at least one data, retrieve said at least one data from said buffer;
- execute said function, said execution comprising the generation of said at least one key from said at least one data.

In a non-limitative embodiment, said integrated circuit device is further adapted to:
- compute at least one data during the execution of said function if:
- said buffer doesn't comprise any data needed for said function; or
- said buffer doesn't comprise all the data needed for said function.

In a non-limitative embodiment, said integrated circuit device is further adapted to:
- upon reception of a command:
   - computing said at least one key from said at least one data;
   - storing said at least one key in said buffer;
   - executing said command.

In addition, there is provided a computer program product comprising a set of instructions, which when loaded into an integrated circuit device causes the integrated circuit device to carry out the method according to any one of the previous characteristics.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 is a first schematic diagram of the method according to a non-limitative embodiment of the invention;
- Fig.2 is a second schematic diagram of the method of Fig. 1, which comprises further steps according to a non-limitative embodiment;
- Fig.3 is a second schematic diagram of the method of Fig. 1, which comprises further steps according to a non-limitative embodiment;
- Fig. 4 illustrates schematically a non-limitative embodiment of an integrated circuit device which is adapted to carry out the method of Fig. 1 to Fig. 3.

### DESCRIPTION OF EMBODIMENTS OF THE INVENTION

In the following description, well-known functions or constructions by the man skilled in the art are not described in detail since they would obscure the invention in unnecessary detail.

The present invention relates to a method for optimizing the execution of a function OP1, said function OP1 generating at least one key k1 and being performed within an integrated circuit device IC, said integrated circuit device IC comprising a buffer BUFF and a processor unit PR.

In the following, the term integrated circuit device IC or IC device will be used indifferently.

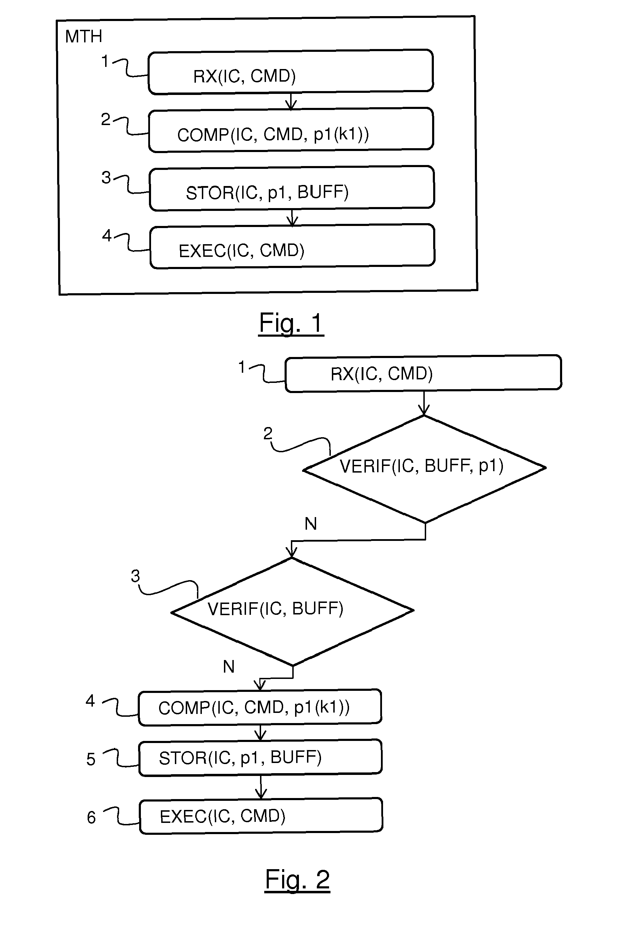

Said method MTH is illustrated in Fig. 1 in a non-limitative embodiment.

Said method MTH comprises:
- upon reception of a command CMD by said integrated circuit device IC (step illustrated RX(IC, CMD)):
   - computing at least one data p1 from which said at least one key k1 will be generated (step illustrated COMP(IC, CMD, p1 (k1));
   - storing said at least one data p1 in said buffer BUFF (step illustrated STOR(IC, p1, BUFF));
   - executing said command CMD (step illustrated EXEC(IC, CMD)).

In a non-limitative embodiment, said steps are performed by means of the processor unit PR of the integrated circuit device IC. In a non-limitative embodiment, a processor unit PR comprises one or a plurality of processors.

It is to be noted that these three steps (computing, storing, executing) may be performed in any other order or in parallel.

Hence, for example, the step of executing said command may be performed before or after the computation of said at least one data p1.

It is to be noted that a function comprises one or a plurality of operations. In a non-limitative embodiment, a function OP1 which generates at least one key k1 comprises a plurality of operations.

In a non-limitative embodiment, the function OP1 is a cryptographic process which is generating cryptographic data such as cryptographic key(s).

In a non-limitative embodiment, said function OP1 is a public key algorithm PK. Said public key algorithm uses a pair of keys k1, k2. Hence, said pair of keys k1, k2 comprises a public key k1 and a private key k2 which are based on prime numbers p1, p2.

In a non-limitative variant of said embodiment, said function OP1 is a Diffie-Hellmann algorithm.

In another non-limitative variant of said embodiment, said function OP1 is a RSA Key generation algorithm.

As a RSA Key generation algorithm and a Diffie-Hellmann algorithm are well-known by the man skilled in the art, they won't be described here.

In a non-limitative examples, said function OP1 is used by a RSA algorithm. As a RSA algorithm is well-known by the man skilled in the art, it won't be described here.

In other non-limitative examples, said function OP1 is used by an elliptic curve or a DSA ("Digital Signature Algorithm") algorithm.

As an elliptic curve and a DSA algorithm are well-known by the man skilled in the art, they won't be described here.

As will be described hereinafter, when computing the at least one data p1 before the function OP1 (which needs said data p1) is executed, it permits to pre-computed said data p1 and keep it ready to use for said function OP1. Said data p1 being a complex data to compute and a time consuming data to compute, it permits to avoid a function OP1 to handle said computation of said data p1 and therefore to reduce its own execution time. Pre-computed data p1 are stored in the buffer BUFF until the function OP1 is requested.

In a non-limitative embodiment, said command CMD is a predetermined command CMD as it is chosen among a list of commands which allow the IC device to send back a response RSP in a delay which permits the execution of said computation of said at least one data p1. It is chosen by the developer who develops the function OP1 and the other different functions of the IC device. Therefore, in a non-limitative embodiment, this command (from which the computation of said at least one data p1 will be triggered) is selected before the personalization phase Ph of said IC device.

Said command CMD is sent by a terminal T.

A terminal T is any kind of device, computer or reader which is adapted to communicate with the integrated circuit device through commands CMD, either in contact or in contactless mode.

As will be described in the following, in a first non-limitative embodiment, the integrated circuit device IC is an integrated circuit card ICC.

In this embodiment, the command CMD is an APDU command APDU_C, which is an application protocol data unit used by the integrated circuit card ICC to communicate with a terminal. An APDU command APDU_C is sent by a terminal to said integrated circuit card ICC device which answers back with an APDU response APDU_R.

In a non-limitative embodiment, the APDU command APDU_C is a STATUS command defined in a non-limitative example in the standard ETSI102221. This command returns information concerning the current directory or current application in the IC device.

In another non-limitative embodiment, the APDU command APDU_C is a SELECT MD/DF/EF command defined in a non-limitative example in the standard ETSI102221. This command selects a file or an application in said integrated circuit card ICC.

Of course different APDU commands APDU_C may be used, such as the STATUS and the SELECT commands. For example, the STATUS command may be used for computing one data p1, and the SELECT command may be used for computing another data p2, both data p1, p2 being used for the generation of at least one key k1.

In a second non-limitative embodiment, the integrated circuit device IC is a hardware security module HSM. In this embodiment, in a non-limitative variant, the command CMD is a PKCS11 command.

In non-limitative examples, the PKSC11 commands are:
- KEYPAIRGEN command, which generates a pair of keys by the hardware security module HSM;
- INIT-TOKEN command, which initializes the hardware security module HSM;
- LOGIN command, which identifies a user to the hardware security module HSM;
- WRITE-OBJECT, which stores data as certificate to the hardware security module HSM.

In a non-limitative embodiment, said buffer BUFF is a dedicated buffer to store said at least one data p1. Thus, it is different from the APDU buffer used for the APDU commands and APDU responses in the embodiment of the integrated circuit card ICC. In non-limitative embodiments, said buffer BUFF is in a volatile memory such as a RAM, or in a non-volatile memory such as in non-limitative example an EEPROM, a flash memory etc.

In a non-limitative embodiment (not illustrated), the method MTH further comprises:
- upon reception of a command CMD by said integrated circuit device IC:
   - computing said at least one key k1 from said at least one data p1;
   - storing said at least one key k1 in said buffer BUFF;
   - executing said command CMD.

Hence, in this embodiment, both said at least one data p1 and key k1 are computed outside the function OP1. It permits to avoid a function OP1 to handle also said computation of said key k1.

Said command CMD is also a predetermined command as it is chosen among a list of commands which allow the IC device to send back a response RSP in a delay which permits the execution of said computation of said at least one key k1. As above, it is chosen by the developer who develops the function OP1 within said IC device and the other different functions of the IC device.

It is to be noted that in this embodiment, the computation of the key k1 and the computation of said at least one data p1 may be performed during the reception of the same command CMD or during the reception of different commands CMD.

Hence, the generation of the at least one key k1 during said function OP1 means:
- the computation of said at least one key k1; or
- the retrieving of said at least one key k1 from said buffer BUFF.

Therefore, in a non-limitative embodiment, the method MTH further comprises retrieving the at least one key k1 from said buffer BUFF. Said retrieving is performed during the execution of the function OP1.

In a non-limitative embodiment, the method MTH further comprises:
- upon reception of said command CMD, verifying if the buffer BUFF is full (step illustrated VERIF(IC, BUFF) in Fig. 2).

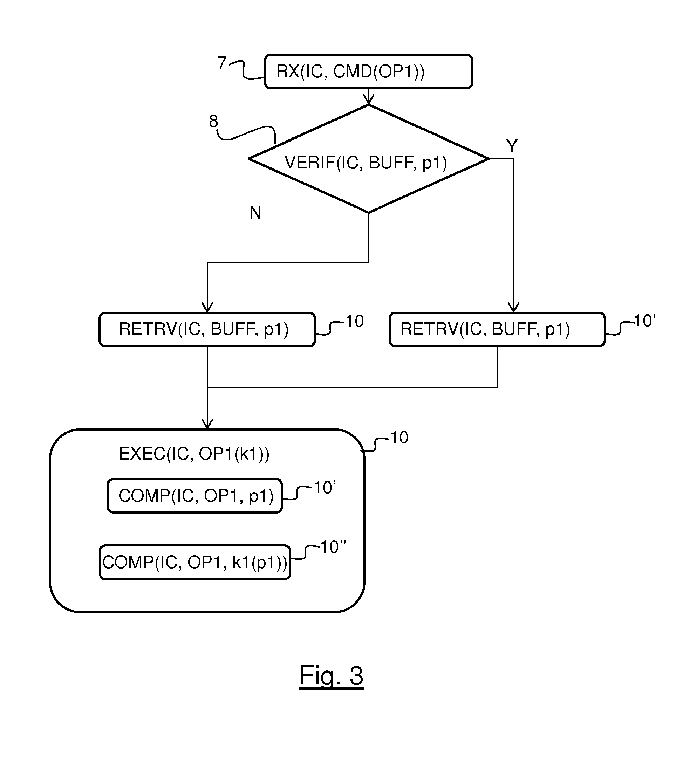

In a non-limitative embodiment, the method MTH further comprises:
- when said function OP1 is called by a command CMD received by said integrated circuit device IC (step illustrated RX(IC, CMD(OP1) in Fig. 3):
   - verifying if said buffer BUFF comprises at least one data p1 from which said at least one key k1 will be generated (step illustrated VERIF(IC, BUFF, p1) in Fig. 2 and Fig. 3);
   - if said buffer BUFF comprises at least one data p1, retrieving said at least one data p1 from said buffer BUFF (step illustrated RETRV(IC, BUFF, p1) in Fig. 3);
   - executing said function OP1, said execution comprising the generation of said at least one key k1 from said at least one data p1 (step illustrated EXEC(IC, OP1(k1)) in Fig. 2 and Fig. 3).

It is to be noted that when the at least one key k1 is not computed during the execution of a command CMD (as above-described in a non-limitative embodiment), said function OP1 comprises the computation of said at least one key k1 from said at least one data p1.

In a non-limitative embodiment, the method MTH further comprises computing at least one data p1 during the execution of said function OP1 (step illustrated COMP(IC, OP1, p1) in Fig. 2 and Fig. 3):
- if said buffer BUFF doesn't comprise any data p1 needed for said key generation; or
- if said buffer BUFF doesn't comprise all the data p1 needed for said key generation.

In a non-limitative embodiment, the computation of at least one data comprises the computation of a pair of data p1, p2 from which a pair of keys k1, k2 will be generated.

In a non-limitative embodiment, said at least one data p1 is a prime number. The computation of a prime number is complex and time consuming. Therefore, it is interesting to pre-compute such prime number.

It is to be noted that for simplification, in the figures 1 to 4, p1 represents at least one prime number (either the first prime number p1, or the second prime number p2, or both prime numbers p1, p2).

In a non-limitative embodiment (not illustrated), said method MTH further comprises storing in said buffer BUFF at least one data p1 which has been computed during a personalization phase Ph of said integrated circuit device IC.

Hence, said buffer BUFF may comprise at least one data p1 which has been computed during a personalization phase Ph of said integrated circuit device IC. Hence, said prime number p1 may be either pre-computed on board during a command CMD or outside the IC device. In this latter case, said prime number p1 is loaded (not illustrated) during the production phase Ph, in a secure environment.

In a non-limitative embodiment, these further non-limitative steps above-described are all performed by means of the processor unit PR of the integrated circuit device IC.

Fig. 2 and Fig. 3 illustrate a schematic diagram comprising the further non-limitative steps above-mentioned.

In particular, Fig. 2 illustrates the steps (1 to 6) after reception of said command CMD, and Fig. 3 illustrates the steps (7 to 11) after the request of the function OP1 to be executed, i.e. after the call of said function OP1 by a command.

In the non-limitative example taken for the following:
- the integrated circuit device IC is an integrated circuit card ICC;
- a pair of prime numbers p1, p2 is computed, and a pair of keys k1, k2 is computed based on said pair of prime numbers p1, p2;
- the command CMD received by the integrated circuit device IC is an APDU command, and said APDU command APDU_C is a STATUS command;- the response RSP sent by the integrated circuit device IC is an APDU response APDU_R;
- the buffer doesn't comprise any prime numbers, when the IC device receives said STATUS command;
- the key computation is performed during the execution of said function OP1.

When an IC device receives a STATUS command, the following steps are performed.

It is to be reminded that as the IC device acts as a slave regarding a terminal. Hence, before the reception of an APDU command APDU_C, it is in a sleep mode. The reception of an APDU command APDU_C permits said IC device to be in an awoken mode. Hence, it will be able to perform some tasks such as the steps below.

Upon reception of a STATUS command by said IC device **in step 1**), **in step 2)**, said IC device verifies if said buffer BUFF comprises all the prime numbers p1, p2 for generating the pair of keys k1, k2.

It is to be noted that if said buffer BUFF comprises all the prime number p1, p2, said IC device will execute the function OP1 and during said function OP1, retrieve the pre-computed prime number p1, p2 from said buffer BUFF and compute both keys k1, k2 from said prime number p1, p2 (see step 8 below).

As it is not the case, **in step 3**), said IC device verifies if said buffer BUFF is full.

It is to be noted that this step 3) may be performed before the step 2).

It is to be noted that if said buffer is full, the computation of both prime numbers p1, p2 is performed as usual during the execution of the function OP1.

As in the given non-limitative example, there is still some room in the buffer BUFF, **in step 4**), said IC device computes a first prime number p1 from which said keys k1, k2 will be generated.

In this non-limitative example, the delay for the IC device to answer said STATUS command is long enough to execute said STATUS command and one computation of one prime number p1, but not long enough to compute the two prime numbers p1, p2.

Of course, when the delay is long enough, the computation of the two prime numbers is performed.

In a non-limitative embodiment (not illustrated), a prime number computation p1 comprises:
- generating a random number Sd;
- verifying if said random number Sd is a prime number p1 with a primality test PT.

If the primality test is negative, the random generation is reiterated.

As this primality test is well-known by the man skilled in the art, it won't be described here.

**In step 5**), said IC device stores said prime number p1 in said buffer BUFF. Hence, this pre-computed data p1 is stored in said buffer BUFF until the function OP1 which needs said data p1 is requested.

**In step 6**), said IC device executes said STATUS command.

Thus, the IC device will send an APDU response APDU_R to the terminal which comprises its status.

It is to be noted that this STATUS command is frequently sent to the IC device by the terminal T. By using this STATUS command, it is possible to frequently pre-compute the prime numbers p1, p2 needed, so that this time consuming computation process will be partly or not at all executed by the function OP1.

In order to increase the time for the pre-computation of said prime numbers p1, p2, in a non-limitative embodiment, the frequency of the reception of said STATUS command by said IC device is increased. For this purpose, the POLL INTERVAL proactive command defined in the standard ETSI102223 is used to configure the frequency of reception of said STATUS command by the IC device. In this way, the time needed to pre-compute the prime numbers p1, p2 may be split into several STATUS commands.

Hence, in non-limitative embodiments, it permits:
- a computation of one prime number in a STATUS command, and the computation of another prime number in another STATUS command; or
- a computation of one prime number to be split into several STATUS command: the different operations (of the random generation, of the primality test) needed to compute a prime number are executed within several STATUS commands. In this case, the at least one data computed (from which said at least one key k1 will be generated) will be in fact, once, the random generated, another time the different results of the primality test.

When the function OP1 which needs said prime numbers p1, p2 is called by an APDU command APDU_C received by said integrated circuit device IC **in step 7**), **in step 8**), said IC device verifies if said buffer BUFF comprises the two prime numbers p1, p2 from which said keys k1, k2 will be generated.

It is to be noted that in the non-limitative given example, the generation of one key (k1 or k2) is based on both prime numbers p1, p2.

As in the non-limitative example, said buffer BUFF doesn't comprise all the prime numbers needed for the generation of both keys k1, k2, (as it only comprises the first prime number p1), said IC device computes the second prime number p2 during the execution of said function OP1 (see step 10').

It is to be noted that if said buffer BUFF doesn't comprise any of the two prime numbers p1, p2, in the same manner, said IC device computes the first and second prime numbers p1, p2 during the execution of said function OP1.

**In step 9**), said IC device retrieves the prime number which is in said buffer BUFF, i.e. here, said first prime number p1 from said buffer BUFF.

Of course, when said buffer BUFF comprises the two prime numbers p1, p2, said IC device will retrieve both prime numbers from said buffer BUFF (step 10' illustrated in Fig. 3).

**In step 10**), said IC device executes said function OP1 which comprises the generation of said pair of keys k1, k2.

During the execution of said function OP1, said IC device computes the second prime number p2 as described before (step 10'), and computes said pair of keys k1, k2 from said retrieved prime number p1 and from said computed prime number p2 (step 10"). The generation of the pair of keys k1, k2 is therefore performed by the computation of said pair of keys k1, k2 during said function OP1.

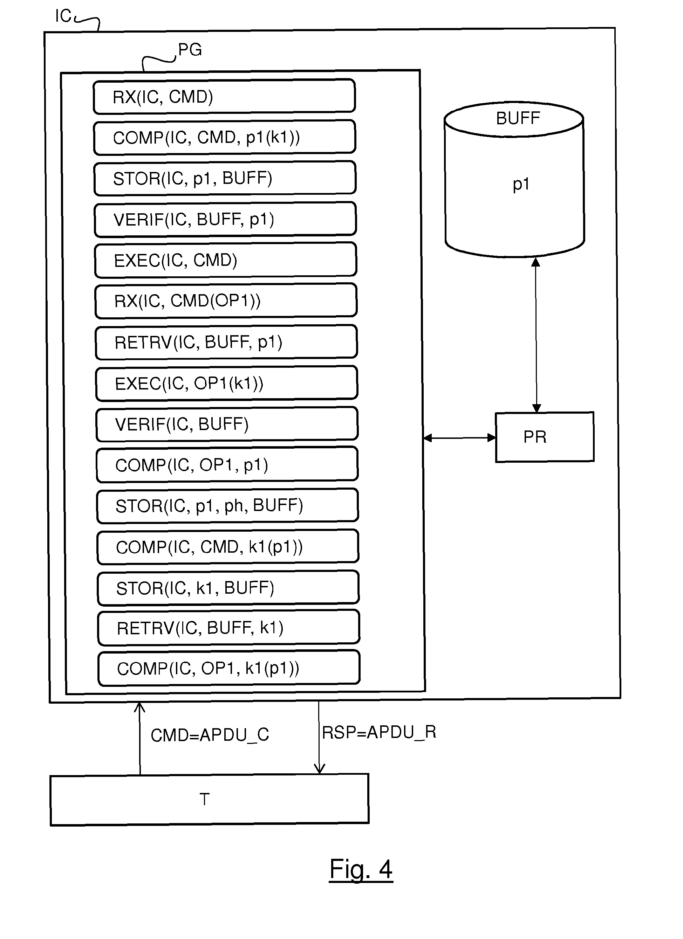

Hence, the method MTH above-described is carried out by an integrated circuit device IC (illustrating in Fig. 4) comprising a processor unit PR and a buffer BUFF, said integrated circuit device IC being adapted to optimize the execution of a function OP1 which generates at least one key k1.

In the non-limitative example illustrated in Fig. 4, the buffer comprises only the first prime number p1, as the second prime number p2 is computed during the function OP1 in the non-limitative described example.

Said integrated circuit device IC is a secure element.

A secure element is a secured component which comprises a secured chip and may perform cryptographic functions and is adapted to store secret information.

In a first non-limitative variant, said secure element is an integrated circuit card ICC, also called ICC card. The ICC card may be contact or contactless. In non-limitative examples of this first variant, the secure element is a smart device, a soldered element, a M2M module, an eSE (embedded secure element), a micro-SD etc.

In non-limitative examples, the ICC card is a banking card, such as an EMV card, an Electronic Identity Card, a health card, a driving license, a passport, a privacy card, a financial service card, an access card etc.

In a second non-limitative variant, said secure element is a hardware security module HSM. Said hardware security module is adapted to be connected to a terminal T.

It is to be noted that the ICC card may be used as an HSM.

Said IC device is adapted to:
- receive a command CMD (function illustrated RX(IC, CMD) in Fig. 4).
- upon reception of said command CMD:
   - compute at least one data p1 from which said at least one key k1 will be generated (function illustrated COMP(IC, CMD, p1(k1)) in Fig. 4);
   - store said at least one data p1 in said buffer BUFF ((function illustrated STOR(IC, p1, BUFF) in Fig. 4);
   - execute said command CMD (function EXEC(IC, CMD) in Fig. 4).

In a non-limitative embodiment, said IC device is further adapted to:
- receive a command CMD which calls the function OP1 (function illustrated RX(IC, CMD(OP1) in Fig. 4);
- when said function OP1 is called by a command CMD received by said integrated circuit device IC:
   - verify if said buffer BUFF comprises said at least one data p1 (function illustrated VERIF(IC, BUFF, p1) in Fig. 4);
   - if said buffer BUFF comprises said at least one data p1, retrieve said at least one data p1 from said buffer BUFF (function illustrated RETRV(IC, BUFF, p1) in Fig. 4);
   - execute said function OP1, said execution comprising the generation of said at least one key k1 from said at least one data p1 (function illustrated EXEC(IC, OP1 (k1)) in Fig. 4).

In a non-limitative embodiment, said IC device is further adapted to:
- upon reception of said command CMD, verify if the buffer BUFF is full (function illustrated VERIF(IC, BUFF) in Fig. 4).

In a non-limitative embodiment, said IC device is further adapted to store in said buffer BUFF at least one data p1 which has been computed during a personalization phase ph of said integrated circuit device IC (function illustrated STOR(IC, p1, ph, BUFF) in Fig. 4).

In a non-limitative embodiment, said IC device is further adapted to compute at least one data p1 during the execution of said function OP1 (function illustrated COMP(IC, OP1, p1) in Fig. 4).

In a non-limitative embodiment, said IC device is further adapted to:
- upon reception of a command CMD:
   - compute said at least one key k1 from said at least one data p1 (function illustrated COMP(IC, CMD, k1(p1)) in Fig. 4);
   - store said at least one key k1 in said buffer BUFF (function illustrated STOR(IC, k1, BUFF) in Fig. 4); and
   - execute said command CMD.

In another non-limitative embodiment, said IC device is further adapted to:
- retrieve said at least one key k1 from said buffer BUFF (function illustrated RETRV(IC, BUFF, k1) in Fig. 4); and
- compute said at least one key k1 from said at least one data p1 during the execution of said function OP1 (function illustrated COMP(IC, OP1, k1 (p1)) in Fig. 4).

In a non-limitative embodiment, the processor unit PR of said IC device is adapted to perform all those above-described functions.

It is to be understood that the present invention is not limited to the aforementioned embodiments.

One or a plurality of computer program products PG as illustrated in Fig. 4 can be contained in the IC device. A computer program product PG comprises a set of instructions. Thus, said set of instructions contained, for example, in an IC device memory, may cause the IC device to carry out the different steps of the method MTH.

Hence, some embodiments of the invention may comprise one or a plurality of the following advantages:
- it is easy to implement;
- it avoids an integrated circuit device IC to be reset for wrong reasons;
- it avoids replacing the processor unit PR of the integrated circuit device IC with a faster one which would involve higher cost;
- it avoids looking for an optimizing function OP1 which would involve high cost in term of research;
- with the pre-computed data p1, the duration to perform the function OP1 is greatly shorten to a consistent timing;
- it permits to pre-compute data p1 which are complex to compute and time consuming to compute.

## Claims

1. Method (MTH) for optimizing the execution of a function (OP1), said function (OP1) generating at least one key (k1) and being performed within an integrated circuit device (IC), said integrated circuit device (IC) comprising a buffer (BUFF), wherein said method (MTH) comprising:
- upon reception of a command (CMD) by said integrated circuit device (IC):
- computing at least one data (p1) from which said at least one key (k1) will be generated;
- storing said at least one data (p1) in said buffer (BUFF);
- executing said command (CMD).

2. Method (MTH) according to claim 1, wherein it further comprises:
- upon reception of a command (CMD) by said integrated circuit device (IC):
- computing said at least one key (k1) from said at least one data (p1);
- storing said at least one key (k1) in said buffer (BUFF);
- executing said command (CMD).

3. Method (MTH) according to claim 1 or claim 2, wherein it further comprises:
- when said function (OP1) is called by a command (CMD) received by said integrated circuit device (IC):
- verifying if said buffer (BUFF) comprises said at least one data (p1);
- if said buffer (BUFF) comprises said at least one data (p1), retrieving said at least one data (p1) from said buffer (BUFF);
- executing said function (OP1), said execution comprising the generation of said at least one key (k1) from said at least one data (p1).

4. Method (MTH) according to any one of the previous claims 1 to 3,, wherein it further comprises computing at least one data (p1) during the execution of said function (OP1) if:
- said buffer (BUFF) doesn't comprise any data (p1) needed for said key generation; or
- said buffer (BUFF) doesn't comprise all the data (p1) needed for said key generation.

5. Method (MTH) according to any one of the previous claims 1 to 4, wherein it further comprises:
- upon reception of said command (CMD), verifying if the buffer (BUFF) is full.

6. Method (MTH) according to any one of the previous claims 1 to 5, wherein it further comprises storing in said buffer (BUFF) at least one data (p1) which has been computed during a personalization phase (Ph) of said integrated circuit device (IC).

7. Method (MTH) according to any one of the previous claims 1 to 6, wherein said computation of at least one data (p1) comprises the computation of a pair of data (p1, p2) from which a pair of keys (k1, k2) will be generated.

8. Method (MTH) according to the previous claim 7, wherein said pair of keys (k1, k2) comprises a public key (k1) and a private key (k2).

9. Method (MTH) according to any one of the previous claims 1 to 8, wherein said function (OP1) is a public key algorithm (PK).

10. Method (MTH) according to the previous claim 9, wherein said public key algorithm (PK) is a RSA Key generation algorithm.

11. Method (MTH) according to any one of the previous claims 1 to 10, wherein said at least one data (p1) is a prime number.

12. Method (MTH) according to claim 11, wherein said computation of at least one prime number (p1, p2) comprises:
- generating a random number (Sd);
- verifying if said random number (Sd) is a prime number (p1, p2) with a primality test.

13. Method (MTH) according to any one of the previous claims 1 to 12, wherein said integrated circuit device (IC) is an integrated circuit card (ICC) and said command (CMD) is an APDU command (APDU_C).

14. Integrated circuit device (IC) for optimizing the execution of a function (OP1) which generates at least one key (k1), said integrated circuit device (IC) comprising a buffer (BUFF) and being adapted to:
- upon reception of a command (CMD):
- compute at least one data (p1) from which said at least one key (k1) will be generated;
- store said at least one data (p1) in said buffer (BUFF);
- execute said command (CMD).

15. Integrated circuit device (IC) according to the previous claim 14, wherein when said function (OP1) is called by a command (CMD) received by said integrated circuit device (IC), said integrated circuit device (IC) is further adapted to:
- verify if said buffer (BUFF) comprises said at least one data (p1);
- if said buffer (BUFF) comprises said at least one data (p1), retrieve said at least one data (p1) from said buffer (BUFF);
- execute said function (OP1), said execution comprising the generation of said at least one key (k1) from said at least one data (p1).
